**Europäisches Patentamt**

**European Patent Office**

**Office européen des brevets**

(11) Veröffentlichungsnummer: **0 259 504**
**B1**

(12) **EUROPÄISCHE PATENTSCHRIFT**

(45) Veröffentlichungstag der Patentschrift: **10.10.90**

(21) Anmeldenummer: **87902872.8**

(22) Anmeldetag: **13.03.87**

(86) Internationale Anmeldenummer:
**PCT/SU87/00030**

(87) Internationale Veröffentlichungsnummer:
**WO 87/05584 24.09.87 Gazette 87/21**

(51) Int. Cl.⁵: **B 65 G 1/04**

(54) **LAGER FÜR STRÜCKGÜTER.**

(30) Priorität: **14.03.86 SU 4033006**

(43) Veröffentlichungstag der Anmeldung:
**16.03.88 Patentblatt 88/11**

(45) Bekanntmachung des Hinweises auf die
Patenterteilung:
**10.10.90 Patentblatt 90/41**

(84) Benannte Vertragsstaaten:
**AT BE CH DE FR GB IT LI LU NL SE**

(56) Entgegenhaltungen:
**DE-A-2 242 475**
**SU-A- 590 193**
**US-A-2 803 356**
**US-A-4 062 458**

(73) Patentinhaber: **IZDATELSTVO 'IZVESTIA
SOVETOV NARODNYKH DEPUTATOV SSSR'**
**Pushkinskaya, pl., 5**
**Moscow, 103798 (SU)**

(72) Erfinder: **GUTOV, Sergei Konstantinovich**
**ul. Ramenka, 7-1-76**
**Moscow, 117607 (SU)**
Erfinder: **PLESSER, DMITRY Abramovich**
**ul. Seleznevskaya, 30-3-14**
**Moscow, 103473 (SU)**
Erfinder: **RADUTSKY, Grigory Avramovich**
**ul. Pervomaiskaya, 66-45**
**Moscow, 105554 (SU)**

(74) Vertreter: **Nix, Frank Arnold, Dr.**
**Kröckelbergstrasse 15**
**D-6200 Wiesbaden (DE)**

Courier Press, Leamington Spa, England.

## Beschreibung

### Gebiet der Technik

Die Erfindung bezieht sich auf Lagereinrichtungen und betrifft insbesondere Lager für Stückgüter.

### Zugrundeliegender Stand der Technik

Gegenwärtig werden für die Lagerung von Stückgütern, besonders ohne direkte Adressenangabe, Lager vom Gravitations- oder Regaltyp benützt.

In den Lagern vom Gravitationstyp wird die Kapazität des Lagerraums nicht wirksam genug ausgenutzt, weil die Zellen unter einem Winkel zur Horizontalen angeordnet werden sollen, Außerdem sind diese Lager im Aufbau kompliziert, weil in den Zellen Bremsvorrichtungen für das Gut aufgestellt werden sollen.

In den Lagern vom Regaltyp wird die Kapazität des Lagerraums wirksamer ausgenutzt. Es ist beispielsweise ein Lager mit Regalen (DE—A—2543545) bekannt, bei denen jedes Gerüst aus senkrechten Ständern besteht. An diesen Ständern sind Regalbretter übereinander und fliegend befestigt, die mit ihren freien Enden unter Bildung eines senkrechten Durchgangs einander zugewandt sind. In jedem Durchgang ist ein horizontales Förderband angeordnet, dessen Enden über das Gerüst hinausragen. Dieses Förderband wird zwischen den freien Enden der Regalbretter in der senkrechten Ebene an der Höhe des Gerüstes entlang durch einen selbständigen Antrieb bewegt, der ein System von Schraubenpaaren darstellt, deren Spindeln mittels Übertragungswerken über ein Getriebe mit einem Elektromotor verbunden sind.

Obwohl in jedem Regal dieses Lagers seine Lagerkapazität besser ausgenutzt wird, sind jedoch für die Anordnung und Bedienung der Förderbandantriebes Gänge zwischen den Regalen erforderlich, wodurch der Ausnutzungsfaktor des gesamten Lagerraums herabgesetzt wird. Außerdem ist der Aufbau des Lagers im ganzen durch die Bestückung eines jeden Regals mit einem selbständigen Antrieb sehr verwickelt, und zur Vermeidung der Schrägstellung und des Festklemmens der Regalförderbänder sollen sich die Spindeln eines jeden Antriebes synchron drehen, wodurch der Betrieb derartiger Lager erschwert wird.

### Offenbarung der Erfindung

Der Erfindung liegt die Aufgabe zugrunde, ein Lager zu entwickeln, in dem durch die Verollkommnung der Konstruktion des Elements zur Bewegung von Gütern in den Regalen eine Erhöhung der wirksamen Ausnutzung der Kapazität des Lagerraumes gewährleistet, eine Vereinfachung des Aufbaus des Lagers und eine Erleichterung seiner Bedienung erzielt wird.

Die gestellte Aufgabe wird dadurch gelöst, daß in einem Lager für Stückgüter, das Regale enthält, bei denen jedes Gerüst aus senkrechten Ständer besteht, an denen mit ihren freien Enden unter Bildung eines senkrechten Durchgangs einander zugewandte Regalbretter übereinander und fliegend sowie horizontale Förderbänder mit über das Gerüst hinausragenden Enden befestigt sind, von denen je eines in jedem Durchgang mit der Möglichkeit einer senkrechten Bewegung über die gesamte Gerüsthöhe zwischen den freien Enden der Regalbretter angeordnet sind, erfindungsgemäß die Rahmen der Förderbänder an deren herausragenden Enden mit steifen Streben verbunden sind, die mit den Rahmen ein Gitter bilden, das auf der gesamten Lagerhöhe zwischen den freien Enden der Regalbretter durch einen gemeinsamen Antrieb verlagert wird, der eine Trommel und ein Seil- und Scheibensystem einschließt, dessen Seile um bewegliche und unbewegliche Scheiben herumgelegt und mit den einen Enden an der Antriebstrommel und mit den anderen Enden am Regal befestigt sind.

Durch die Ausführung des Elements zur Bewegung von Gütern in Form eines Gitters werden die benachbarten Regale zusammengefügt, wodurch die nutzbare Kapazität des Lagerraums vergrößert wird. Dadurch, daß der Gitterantrieb als ein gemeinsamer Antrieb für sämtliche Regalförderbänder und in Forme eines Seil- und Scheibensystems ausgeführt ist, wird die Konstruktion des Antriebs vereinfacht, seine Funktionssicherheit erhöht sowie die Bedienung des Lagers erleichtert.

Zweckmäßigerweise werden die steifen Streben röhrenförmig ausgebildet, in den Rohren Seile das Seil- und Scheibensystems durchgeführt, die beweglichen Scheiben dieses Systems an den Rohrelementen und die unbeweglichen an den Regalen befestigt.

Bei einer derartigen Ausführung wird die Verbindung des Gitters mit dem Antrieb vereinfacht und die Höhe des Lagerraums durch die Anbringung des Seils innerhalb des Gitters wirksamer ausgenutzt.

### Kurze Beschreibung der Zeichnungen

Nachstehend wird die Erfindung an Hand eines konkreten Ausführungsbeispiels unter Bezugnahme auf die beiliegenden Zeichnungen erläutert. Es zeigt:

Fig. 1 die Gesamtansicht eines erfindungsgemäßen Lagers in Seitenansicht,

Fig. 2 den Schnitt nach der Linie II—II in Fig. 1,

Fig. 3 den Schnitt nach der Linie III—III in Fig. 1,

Fig. 4 das erfindungsgemäße Lager in Draufsicht.

### Beste Ausführungsvariante der Erfindung

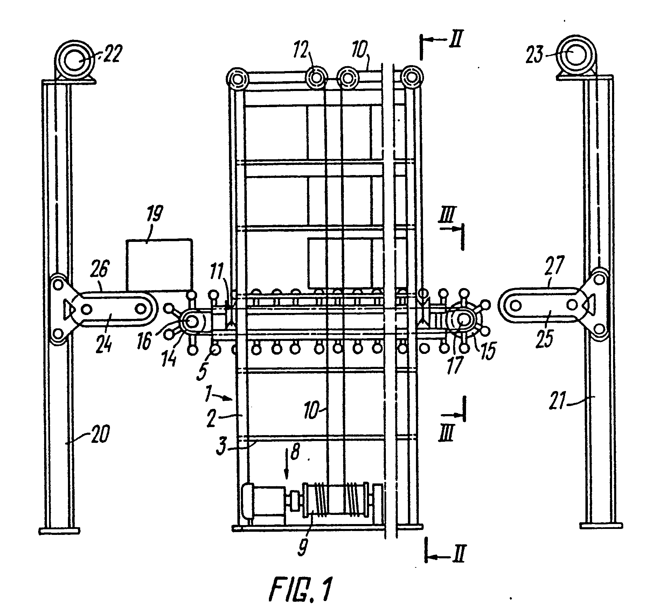

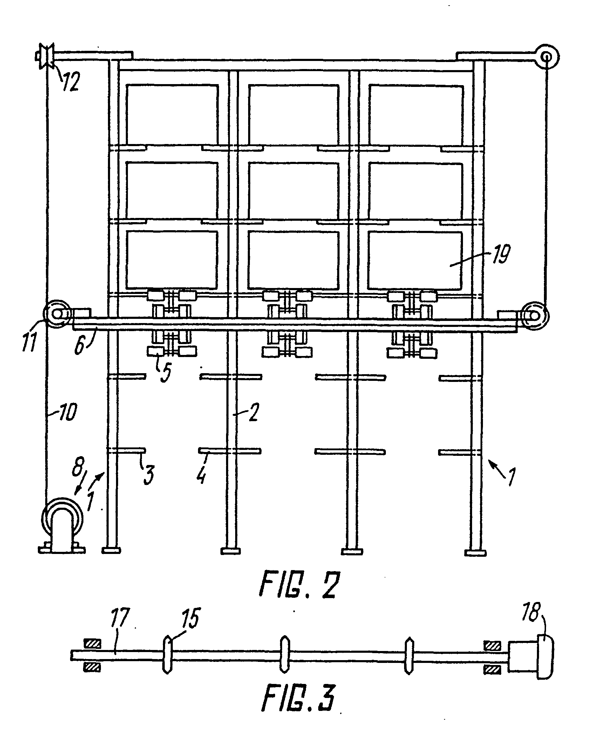

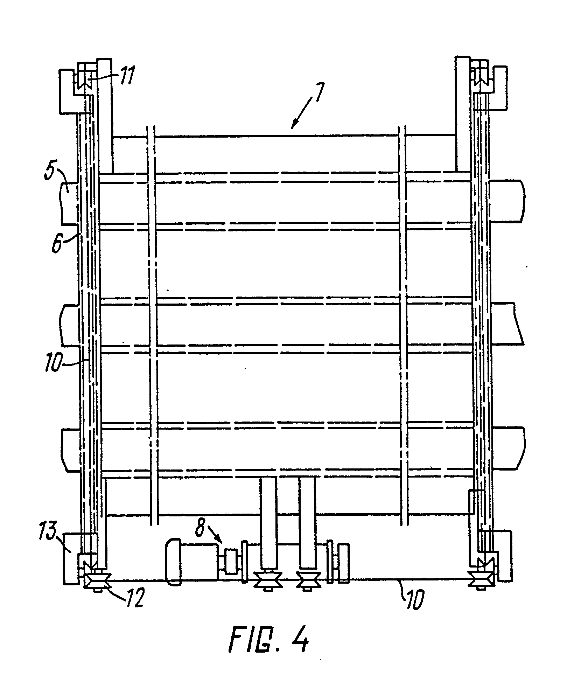

Das Lager beinhaltet eine horizontale Reihe aus Regalen 1 (Fig. 1, 2), bei denen jedes Gerüst 2 aus senkrechten Ständern besteht, an denen unter Bildung eines senkrechten Durchgangs einander mit ihren freien Enden zugewandte Regalbretter 3, 4 übereinander und fliegend befestigt sind. In jedem Durchgang ist ein horizontalens Förderband 5 mit über das Gerüst hinausragenden Enden angeordnet. Die Rahmen der Förderbänder 5 sind auf deren herausragenden Enden mit steifen Streben 6 verbunden, die mit deren Rahmen ein Gitter 7 (Fig. 4) bilden, das auf der gesamten Lagerhöhe zwischen den freien Enden der Regalbretter 3, 4 (Fig. 1) durch einen gemeinsamen Antrieb 8 verlagert wird. Dieser Antrieb 8 enthält eine Trommel 9 und ein Seil- und Scheibensystem, dessen Seile 10 um bewegliche 11 und unbewegliche Scheiben 12 herumgelegt sind. Die Seile 10 sind mit ihren einen Enden an der Trommel 9 und mit den anderen am Regal 1 befestigt. Die steifen Streben 6 sind als Rohrelemente ausgeführt, wie in Fig. 4 gezeigt ist, in denen die Seile 10 des Seil- und Scheibensystems untergebracht sind. Dabei sind die beweglichen Scheiben 11 mittels Tragarmen 13 an den Rohrelementen und die unbeweglichen Scheiben 12 an den Regalen 1 (Fig. 1) befestigt.

Die Spann- 14 und die Antriebsräder 15 der Förderbander 5 der benachbarten horizontalen Reihen der Regale 1 sind außerhalb dieser auf gemeinsamen Wellen 16, 17 angeordnet und mit einem gemeinsamen Antrieb 18 (Fig. 3) für deren Drehung versehen. Als dieser Antrieb kann ein beliebiger bekannter Antrieb, beispielsweise ein elektrischer Getriebemotor eingesetzt werden. Die Beladung der Regale mit Gütern 19 (Fig. 1) und die Entnahme der Güter erfolgt mit Mitteln 20 bzw. 21, die durch Antriebe 22, 23 heb- und senkbare Plattformen 24, 25 darstellen. Jede der Plattformen 24, 25 ist mit Förderbändern 26, 27 für die Aufgabe der Güter 19 in die Regale und deren Entnahme aus diesen Regalen versehen.

Das Lager funktioniert folgenderweise.

Auf jedes der Förderbänder 26 der heb- und senkbaren Plattform 24 des Mittels 20 zur Beladung der Regale 1 wird ja eine Einheit vom Stückgut 19 aufgegeben. Das Gitter 7 ist in der Ausgangsstellung (bei leerem Lager) in die Höhe der oberen Regaletage derart gehoben, daß die lasttragenden Bahnen der das Gitter bildenden Förderbänder 5, die sich in den Durchgängen zwischen den freien Enden der Regalplatten 3, 4 befinden, über der Oberfläche dieser Teile der Regalbretter zu liegen kommen. Dann wird der Antrieb 22 der heb- und senkbaren Plattform 24 eingeschaltet, sie wird gehoben, bis die lasttragenden Bahnen der Förderbänder 26 und 5 in der gleichen Ebene liegen, und danach werden die Antriebe dieser Förderbänder eingeschaltet, bis die Güter auf die Regalbretter der oberen Lageretage überführt werden. Dann wird die Plattform 24 für die Beladung abgesenkt und der beschriebene Vorgang wird wiederholt. Die Regalbretter der oberen Regaletage werden solange beladen, bis die Stückgüter auf jeden der Regalbretter dieser Etage auf den Förderbändern 5 hintereinander vom Entnahme- bis zum Aufgabeende liegen, wonach der Antrieb 8 eingeschaltet und das Gitter 7 eine Etage tiefer verlagert wird und die Regalbretter auf die oben beschriebene Weise beladen werden. Die Förderbänder 5 des Gitters 7 lassen die Güter 19 auf den Regalbretter 3, 4 beim Neidergang in den Durchgängen zwischen den freien Enden derselben liegen. Dann wird das Gitter 7 auf die Höhe der unteren Lageretage abgesenkt, wodurch die Beladung der Regalbretter sämtlicher Lageretagen gewährleistet wird.

Die Entnahme der Güter aus dem Lager erfolgt ähnlich wie die Beladung mit dem Unterschied, daß die Förderbänder 5 des Gitters 7 mit den Förderbändern 27 der heb- und senkbaren Plattform 25 des Mittels 21 zur Entnahme der Güter aus dem Lager zusammenwirken. Dabei wird nach der Entnahme der Güter aus der an der Reihefolge stehenden Etage der Regale 1 durch die Förderbänder 5 der Antrieb 8 des Gitters 7 eingeschaltet und es wird für die Entnahme der Güter aus der nächsten Etage gehoben. Beim Heben des Gitters 7 verlagern sich die lasttragenden Bahnen der Förderbänder 5 in den Durchgängen zwischen den freien Enden der Regalbretter 3, 4 mit den zu entnehmenden Gütern 19 und übernehmen sie, indem sie etwas oberhalb der Oberfläche dieser Regalbretter stehenbleiben.

Industrielle Anwendbarkeit

Besonders wirksam wird die vorliegende Erfindung zur Lagerung von gleichartigen Gütern ohne direkte Adressenangabe beispielsweise von Standardpaketen mit Zeitungen gleichen Titels eingesetzt.

**Patentansprüche**

1. Lager für Stückgüter, das Regale (1) enthält, bei denen jedes Gerüst (2) aus senkrechten Ständern besteht, an denen unter Bildung eines senkrechten Durchgangs einander mit ihren freien Enden zugewandte Regalbretter (3, 4) übereinander und fliegend sowie horizontale Förderbänder (5) mit über das Gerüst hinausragenden Enden befestigt sind, von denen je eines in jedem Durchgang mit der Möglichkeit einer senkrechten Bewegung über die gesamte Gerüsthöhe zwischen den freien Enden der Regalbretter angeordnet ist, dadurch gekennzeichnet, daß die Rahmen der Förderbänder (5) an deren herausragenden Enden mit steifen Streben (6) verbunden sind, die mit den Rahmen ein Gitter (7) bilden, das auf der gesamten Lagerhöhe zwischen den freien Enden der Regalbretter (3, 4) durch einen gemeinsamen Antrieb (8) verlager bar ist, der eine Trommel (9) und ein Seil- und Scheibensystem enthält, dessen Seile (10) um bewegliche (11) und unbewegliche (12) Scheiben herumgelegt und mit ihren einen Enden an der Trommel (9) das Antriebs (8) und mit den anderen Enden am Regal (1) befestigt sind.

2. Lager nach Anspruch 1, dadurch gekennzeichnet, daß die steifen Streben (6) röhrenförmig ausgebildet und die Seile (10) des Seil- und Scheibensystems durch sie hindurchgeführt sind, dessen bewegliche Scheiben (11) an den Rohrelementen und dessin umbewegliche (12) an den Regalen (1) befestigt sind.

**Revendications**

1. Dispositif pour le stockage de charges, comportant des casiers (1), l'ossature de chacun desdits casiers étant constitué par des montants verticaux auxquels des rayons (3, 4) superposés sont fixés en porte-à-faux, leurs extrémités libres étant en regard de façon à former un passage vertical, et des bandes transporteuses horizontales dont les extrémités dépassent l'ossature et dont un est monté dans chaque passage avec la possibilité de déplacement vertical sur toute la hauteur de l'ossature entre les extrémités libres des rayons, caractérisé en ce que les cadres des bandes transporteuses (5) sont reliés à leurs extrémités dépassantes, à des traverses rigides (6) formant, avec les cadres, une grille (7) qui est déplaçable sur toute la hauteur de stockage entre les extrémités libres des rayons (3, 4) par un système d'entraînement commun (8) comprenant un tambour (9) et un système de câbles et de poulies, les câbles (10) passant sur des poulies mobiles (11) et fixes (12) et étant fixés par une extrémité au tambour (9) du système d'entraînement (8) et par l'autre extrémité au casier (1).

2. Dispositif selon la revendication 1, caractérisé en ce que les traverses rigides (6) sont réalisées en forme de tubulures à l'intérieur desquelles passent les câbles (10) du système à câbles et à poulies, les poulies mobiles (11) étant fixées sur ces tubulures et les poulies fixes (12) aux casiers (1).

**Claims**

1. Support for parcels comprising stands (1), wherein each framework (2) consists of perpendicular posts, onto which there are fastened, with the formation of a perpendicular passage, stand shelves (3, 4), with their free ends facing one another, above one another and overhung, as well as horizontal conveyor belts (5) with ends projecting over the framework, of which in each case one is arranged in each passage with the possibility of a perpendicular movement over the entire framework height between the free ends of the stand shelves, characterized in that the frames of the conveyor belts (5) at their projecting ends are connected to stiff struts (6), which form with the frames a grid (7) which can be displaced on the entire support height between the free ends of the stand shelves (3, 4) by means of a common drive (8), which comprises a drum (9) and a rope-and-sheave system, the ropes (10) of which are placed around moveable (11) and unmoveable (12) sheaves and are fastened with their one end to the drum (9) of the drive (8) and with the other ends to the stand (1).

2. Support according to claim 1, characterized in that the stiff struts (6) are constructed in a tubular manner and the ropes (10) of the rope-and-sheave system are conducted through them, the moveable sheaves (11) of the system being fastened to the tube elements and the unmoveable ones (12) of the system being fastened to the stands (1).

FIG. 1

FIG. 2

FIG. 3

FIG. 4